# EUROPÄISCHE PATENTSCHRIFT

(11) **EP 1 102 946 B1**
(45) Veröffentlichungstag und Bekanntmachung des Hinweises auf die Patenterteilung: **09.10.2002**
(21) Anmeldenummer: 99950439.2
(22) Anmeldetag: 22.07.1999
(51) Int. Cl.: F16N 11/04

(54) **GEBER ZUR KONTINUIERLICHEN ABGABE EINER FLÜSSIGKEIT**
SENSOR FOR CONTINUOUSLY RELEASING A LIQUID
CAPTEUR PERMETTANT LA DELIVRANCE CONTINUE D'UN FLUIDE

(30) Priorität: 30.07.1998 DE 19834338
(43) Veröffentlichungstag der Anmeldung: 30.05.2001
(73) Patentinhaber: Wenner, Manfred E., 98527 Suhl (DE)
(72) Erfinder: Wenner, Manfred E., 98527 Suhl (DE)
(74) Vertreter: Pöhner, Wilfried Anton, Dr.
(86) Internationale Anmeldenummer: DE9902310
(87) Internationale Veröffentlichungsnummer: WO00006940

(56) Entgegenhaltungen:
- EP-A- 0 598 678
- EP-A- 0 806 602
- DE-A- 1 920 450
- FR-A- 633 476
- FR-A- 2 602 551
- PATENT ABSTRACTS OF JAPAN vol. 009, no. 326 (M-441), 21. Dezember 1985 (1985-12-21) & JP 60 159500 A (AI DEI SHII KK), 20. August 1985 (1985-08-20)

## Beschreibung

Die Erfindung bezieht sich auf einen Geber zur kontinuierlichen Abgabe einer Flüssigkeit, insbesondere eines Schmiermittels, über einen einstellbaren Zeitraum, wobei die Flüssigkeit durch einen beweglichen Arbeitsstempel aus einem Vorratsbehälter ausgeschoben wird und die Bewegung des Arbeitsstempels durch von einem Kraftgeber übertragene Antriebskraft erfolgt, desweiteren der Kraftgeber mit einem Bremsstempel mechanisch verbunden ist, welcher der Antriebskraft mit einer Bremskraft entgegenwirkt, indem er das Volumen einer mit pastöser Flüssigkeit gefüllten Kammer reduziert und daraus Flüssigkeit auspreßt.

Derartige Geber sind beispielsweise aus der DE-OS 195 09 247 bekannt. Sie dienen der kontinuierlichen und dosierten Abgabe von Flüssigkeiten über einen längeren Zeitraum, der einstellbar ist und in der Regel im Bereich von Monaten liegt. Ihr bedeutendstes Einsatzgebiet ist die Abgabe von Stoffen zur Dauerschmierung von Lagern. Die Viskosität der abgegebenen Flüssigkeit kann dabei, beispielsweise im Fall von Schmierfetten, vergleichsweise groß sein und in den Bereich der plastischen Masse reichen. Dabei preßt eine durch eine Feder erzeugte Kraft die Flüssigkeit, insbesondere das Schmiermittel, aus einem Vorratsbehälter. Um dabei eine kontinuierliche, nahezu gleichmäßige Abgabe zu erreichen, ist die Federkraft durch eine Gegenkraft kompensiert, die erzeugt wird, daß eine pastöse Flüssigkeit, insbesondere ein Silikongemisch, aus einer Kammer ausgepreßt wird. Bei Erhöhung der Entspannungsgeschwindigkeit der Feder steigt die Gegenkraft an, so daß sich bei einer bestimmten Entspannungsgeschwindigkeit an der Feder ein Kräftegleichgewicht einstellt. Daraus resultiert ein festgelegter Entleerungszeitraum, dessen Verstellung derzeit mit erheblichem Aufwand verbunden ist. Möglichkeiten dazu sind Austausch der Feder, der Kammer, die die Gegenkraft verursacht, oder der pastösen Flüssigkeit. Gemeinsam ist all diesen Methoden, daß sie einen nicht unerheblichen Zeitaufwand benötigen und dabei nicht ohne die entsprechenden Austauschelemente vor Ort beim Kunden durchführbar sind.

Die Erfindung hat sich demgegenüber die Aufgabe gestellt, einen Geber zu schaffen, dessen Entleerungszeit mit leicht mitführbaren Hilfsmitteln zügig einstellbar ist.

Diese Aufgabe wird erfindungsgemäß dadurch gelöst, daß die pastöse Flüssigkeit durch ein Rohr gepreßt wird, das durchtrennbar ist.

Der Strömungswiderstand bildet vorschlagsgemäß ein Rohr, das sich zur Anpassung des Entleerungszeitraumes verkürzen läßt. Die Wirkungsweise ist folgende: Je kürzer das Rohr ist, desto kleiner ist bei gegebener Geschwindigkeit des Antriebs, d.h. bei gegebener Durchflußmenge durch das Rohr, die Gegenkraft, die entgegen der Antriebskraft wirkt. Da die Gegenkraft aufgrund des Strömungswiderstandes sich bei ansteigender Antriebsgeschwindigkeit erhöht, wird ein Kräftegleichgewicht bei einer höheren Geschwindigkeit erreicht. Der Entleerungsvorgang läuft dann schneller ab. Über eine Durchtrennung und damit verbundene entsprechende Verkürzung des Rohres läßt sich mit einfachen Hilfsmitteln und bei geringem Zeitbedarf die Entleerungszeit stufenlos einstellen. Der Bremsstempel kann dabei mit dem Kraftgeber direkt oder indirekt, beispielsweise über den Arbeitsstempel, verbunden sein. Unter "Rohr" wird im Sinne der Erfindung ein länglicher Körper verstanden, in dessen Längsrichtung sich die Flüssigkeit bewegt. Der Querschnitt kann dabei beliebig sein, beispielsweise in Form eines Kreises oder eines Polygons. Innen kann das Rohr zusätzlich mit Widerstandskörpern versehen sein. Auch die Anbringung mehrerer Rohre, an der Kammer, die sich zur Einstellung der Entleerungszeit ggf. alle verkürzen lassen, ist möglich. Denkbar sind starre oder flexible Rohre, wobei letztere den Vorteil haben, daß sie sich biegen oder gar aufrollen lassen. Damit läßt sich bei Verkürzung über einen großen Längenbereich hinweg das in Bewegungsrichtung vordere Rohrende präzise positionieren, sodaß ein definiertes Auffangen der auslaufenden pastösen Flüssigkeit möglich wird. Die große Länge ermöglicht dabei eine hohe Einstellgenauigkeit und ein weites Einstellintervall.

Das Rohr hat in einer Ausbildung der Erfindung einen über die gesamte Länge konstanten Querschnitt. Die auftretende Gegenkraft ist in diesem Falle nahezu proportional zur Länge des Rohres und, bei laminarer Strömung, auch annähernd proportional zur Durchströmgeschwindigkeit. Daraus ergibt sich eine näherungsweise Proportionalität zwischen Entleerungszeit und Rohrlänge, was die Einstellung erheblich vereinfacht.

Der Durchmesser des Rohres kann sich jedoch auch ändern, insbesondere in Strömungsrichtung der pastösen Flüssigkeit abnehmen. Je kürzer das Rohr ist, desto kleiner ist der minimale durchströmte Querschnitt. Bei Verkürzung sinkt damit die Entleerungszeit überproportional gegenüber der Rohrlänge, wodurch bereits bei relativ kurzen Rohren ein weiter Einstellbereich möglich ist.

Als pastöse Flüssigkeiten haben sich bisher insbesondere Silikone oder Silikongemische bewährt, deren Konsistenz je nach Arbeitsbedingung angepaßt werden kann. Aufgrund der Mannigfaltigkeit derartiger Stoffe können nahezu alle denkbaren Bedingungen gerecht werden. Zusätzlich läßt sich über die Zusammensetzung eines Silikongemisches auch die Viskosität einstellen, woraus sich weitere Einstellmöglichkeiten für die Entleerungszeit ergeben.

In einer vorteilhaften Weiterbildung der Erfindung ist das in Strömungsrichtung vordere Ende des Rohres mit einem Auffangbehälter verbunden. Die ausgestoßenen Stoffe werden damit nicht freigesetzt, so daß mögliche Verunreinigungen durch die pastöse Flüssigkeit unterbleiben und deren Wiederverwertung möglich ist. In jedem Fall jedoch läßt sich die pastöse Flüssigkeit besser einem Recyclingprozeß oder einer Entsorgung unterziehen, wenn sie gezielt aufgefangen und daher nur geringfügig mit Verunreinigungen versehen wird.

Weitere Merkmale der Erfindung tragen zu einer einfachen Konstruktion und kompakten Bauweise des Gebers bei. Die Anordnung von Arbeitsstempel und Vorratsbehälter betreffend wird vorgeschlagen, daß der Arbeitsstempel den Vorratsbehälter auf der in Richtung der Antriebskraft hinteren Seite verkürzt und die Flüssigkeit auf der vorderen Seite abgegeben wird. Die Anordnung der Auslaßöffnung ist damit weitgehend unabhängig vom inneren Aufbau des Gebers, da die Antriebskraft von der Gegenseite angreift und die Konstruktion im Bereich der Auslaßöffnung hierdurch unbeeinflußt bleibt.

Zur Umsetzung ergeben sich inbesondere zwei Möglichkeiten, nämlich die eines Balges, dessen in Bewegungsrichtung hintere Seite möglichst flächenparallel verschoben wird, um eine gezielte und vollständige Auspressung zu ermöglichen. Alternativ dazu kann der Vorratsbehälter auch als Zylinder und der Arbeitsstempel als damit zuammenarbeitender Kolben gebildet sein, der die Flüssigkeit auspreßt.

Zur räumlichen Anordnung von Kraftgeber, Vorratsbehälter und Kammer werden zwei bevorzugte Möglichkeiten vorgeschlagen. Die eine besteht darin, den in Richtung der Antriebskraft offenen Vorratsbehälter in Richtung der Antriebskraft vorne anzuordnen und den Kraftgeber dahinter. In der Regel bleibt in diesem Falle neben dem Kraftgeber, genug Platz um dort die Kammer vorzusehen. Insbesondere jedoch wird eine koaxiale Anordnung von Kraftgeber, Vorratsbehälter und Kammer bevorzugt, in der der Kraftgeber, gebildet als Feder, die die Kammer außen umgibt, sich in axialer Richtung bewegt. Zur Kraftübertragung läßt sich dabei der Bremsstempel vorteilhaft mit dem Kraftgeber indirekt über den Arbeitsstempel verbinden, beispielsweise über einen Stab, der die Kammer in axialer Richtung durchgreift.

Ein anderes Konzept bevorzugt ebenfalls eine koaxiale Anordnung von Kraftgeber, Vorratsbehälter und Kammer, in der die Antriebskraft in axialer Richtung angreift. In diesem Fall jedoch ist der Vorratsbehälter radial außen von der Kammer und dem in Richtung der Antriebskraft hinter der Kammer angeordneten Kraftgeber umgeben, was eine direkte Kraftübertragung von dem Kraftgeber auf die Kammer ohne weitere Hilfsmittel ermöglicht. Die Kraftübertragung auf den Vorratsbehälter dagegen ist erschwert. Dennoch ermöglicht auch diese kompakte Anordnung einen einfach herzustellenden Aufbau des Gebers.

In vorteilhafter Ausbildung der Erfindung verschiebt der Bremsstempel die in Richtung der Antriebskraft hintere Seite der Kammer in Richtung der Antriebskraft, wodurch aufgrund der Volumenreduktion pastöse Flüssigkeit durch das Rohr gepreßt wird. Gleichzeitig wird dabei außerhalb der Kammer das verdrängte Volumen frei und kann beispielsweise mit der austretenden pastösen Flüssigkeit gefüllt werden. Daher läßt sich das Rohr vorteilhaft an der hinteren Seite der Kammer anbringen und die pastöse Flüssigkeit hierdurch in das freiwerdende Volumen ausstoßen. Da der Bremsstempel in Richtung der Antriebskraft drückt, ist kein reparaturanfälliger Kraftübertragungsmechanismus von Nöten.

Wie der Vorratsbehälter, so läßt sich auch die Kammer als Balg oder Kolbenzylinderanordnung gestalten. Bei der Gestaltung als Balg bewegt der Bremsstempel die hintere Seite in Richtung der Antriebskraft. Eine Kolbenzylinderanordnung jedoch ist demgegenüber bevorzugt, da der durch Bewegung des Kolbens relativ zum Zylinder verdrängte Raum sich bei geeigneter Konstruktion als Auffangbehälter für die pastöse Flüssigkeit nutzen läßt. Zur Erreichung der Relativbewegung kann entweder der Zylinder festgelegt sein und der Kolben über den Bremsstempel bewegt werden oder der Kolben festgelegt sein und der Zylinder über den Bremsstempel bewegt werden, wobei im letzteren Fall bei Anordnung des Kraftgebers neben der Kammer die Kraftübertragung vereinfacht ist, da zur Bildung des Bremsstempels die Verbindungselemente zum Kraftgeber lediglich am Zylinder angeformt werden müssen. Der Kraftgeber kann insbesondere als Feder gebildet sein.

Vorzugsweise ist der Kraftgeber derart ausgelegt, daß die Antriebskraft über die gesamte Bewegung des Arbeitszylinders annähernd konstant ist. Damit läßt sich ohne zusätzliche Kompensationsmechanismen eine gleichmäßige Entleerungsgeschwindigkeit des Vorratsbehälters erreichen.

Nach den bisher beschriebenen Ausführungsformen ist eine Verlängerung der eingestellten Entleerungszeit nicht möglich, da die Verkürzung des Rohres stets eine schnellere Entleerung zur Folge hat. Daher sieht die Erfindung in vorteilhafter Ausbildung vor, das Rohr lösbar an der Kammer anzubringen, so daß es durch ein längeres ausgetauscht werden kann. Ein bereits verkürztes Rohr läßt sich dabei durch ein längeres ersetzen, der Austausch kann aber auch gegen ein Rohr erfolgen, das beispielsweise aufgrund einer anderen Querschnittsverteilung einen anderen Einstellbereich für die Entleerungszeit zuläßt.

Desweiteren wird ein Verfahren zur Herstellung des erfindungsgemäßen Gebers vorgeschlagen, bei dem der Geber zunächst mit einem Rohr maximaler Länge versehen wird, so daß alle Einstellungsmöglichkeiten der Entleerungszeit offen sind. Erst nachfolgend, beispielsweise beim Kunden vor Ort oder gar durch den Kunden selbst, erfolgt die Anpassung an den erwünschten Entleerungszeitraum durch Abtrennung eines in Strömungsrichtung vorderen Stückes vom Rohr. Bis auf den einfach durchführbaren Schritt der Verkürzung des Rohres lassen sich damit Geber für unterschiedliche Entleerungszeiträume in einem einheitlichen Verfahren produzieren. Keiner weiteren Erläuterung bedarf, daß sich hieraus erhebliche wirtschaftliche Vorteile ergeben. Die Verkürzung des Rohres läßt sich durch Vertriebspersonal oder auch durch den Kunden selbst durchführen.

Ein weiteres Verfahrensmerkmal bezieht sich auf Geber, bei denen das Rohr lösbar an der Kammer angebracht ist. Zur Verstellung der Entleerungszeit wird vorgeschlagen, das Rohr zu entfernen und durch ein anderes zu ersetzen.

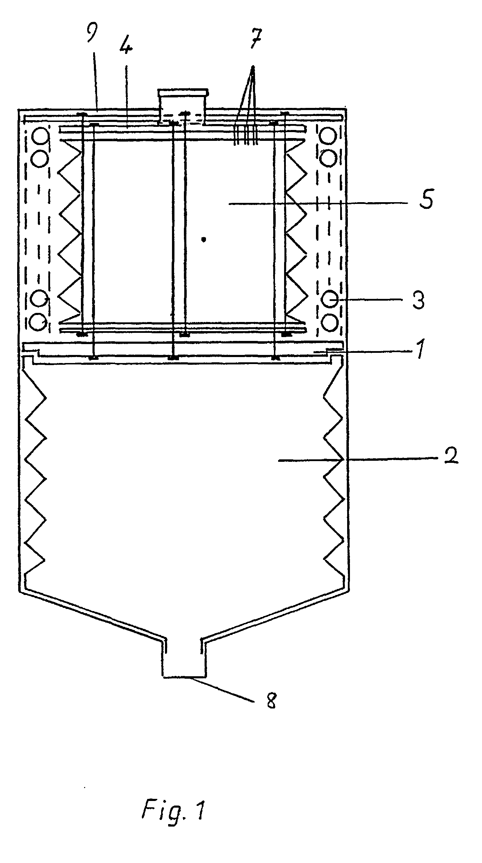

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird. Sie zeigt in schematischer Darstellung einen Schnitt durch einen erfindungsgemäßen Flüssigkeitsgeber.

Der Geber enthält einen Vorratsbehälter (2), in diesem Fall als Balg gebildet, aus dem Fett durch eine unterseitig angebrachte Auslaßföffnung (8) ausgepreßt wird. Auf die in der Figur oben dargestellte Seite des Vorratsbehälters (2) drückt ein Arbeitsstempel (1) der durch einen Kraftgeber (3) in diesem Falle als Feder gebildet, bewegt wird, und dabei das Fett auspreßt. Zur Gewährleistung einer allmählichen kontrollierten Entleerung wirkt der vom Kraftgeber (3) erzeugten Antriebskraft ein Bremsstempel (4) entgegen, der durch mechanische Verbindung mit dem Arbeitsstempel (1) indirekt mit dem Kraftgeber (3) verbunden ist. Zur Erzeugung der Bremskraft drückt der Bremsstempel (4) auf eine Kammer (5), die mit Silikon gefüllt und als Balg gebildet ist, der sich über an der Seite des Bremsstempels (4) angebrachte Rohre (7) entleert. Damit der die Kammer (5) bildende Balg der Einwirkung des Bremsstempels (4) nicht ausweicht, ist seine untere Seite an der oberen Gehäusewand (9) des Gebers fixiert. Das oberseitig durch die Rohre (7) ausgepreßte Silikon gelangt in das durch Zusammenpressen der Kammer (5) frei gewordene Volumen.

Der Bremsstempel (4) setzt der Antriebskraft eine Kraft entgegen, die mit der Deformationsgeschwindigkeit ansteigt bis annähernd ein Kräftgleichgewicht gegeben ist. Durch Verkürzung von Rohren (7) läßt sich bei gegebener Antriebsgeschwindigkeit die Gegenkraft verringern, so daß sich eine höhere Deformationsgeschwindigkeit einstellt. Auf diese Weise kann sich die Zeit zur Entleerung des mit Fett gefüllten Vorratsbehälters (2) eingestellt werden.

## Patentansprüche

1. Geber zur kontinuierlichen Abgabe einer Flüssigkeit, insbesondere eines Schmiermittels, über einen einstellbaren Zeitraum, wobei die Flüssigkeit durch einen beweglichen Arbeitsstempel aus einem Vorratsbehälter ausgeschoben wird und die Bewegung des Arbeitsstempels durch von einem Kraftgeber übertragene Antriebskraft erfolgt, desweiteren der Kraftgeber mit einem Bremsstempel mechanisch verbunden ist, welcher der Antriebskraft mit einer Bremskraft entgegenwirkt, indem er das Volumen einer mit pastöser Flüssigkeit gefüllten Kammer reduziert und daraus Flüssigkeit auspreßt, **dadurch gekennzeichnet, daß**
- die pastöse Flüssigkeit durch ein Rohr (7) gepreßt wird,
- das durchtrennbar ist.

2. Geber nach Anspruch 1, **dadurch gekennzeichnet, daß** das Rohr (7) flexibel ist.

3. Geber nach Anspruch 1 oder 2, **dadurch gekennzeichnet, daß** das Rohr (7) einen über seine Länge im wesentlichen konstanten Querschnitt aufweist.

4. Geber nach einem der vorhergehenden Ansprüche, **dadurch gekennzeichnet, daß** der Querschnitt des Rohres (7) in Strömungsrichtung der pastösen Flüssigkeit abnimmt.

5. Geber nach einem der vorhergehenden Ansprüche, **dadurch gekennzeichnet, daß** die pastöse Flüssigkeit ein Silikon oder Silikongemisch ist.

6. Geber nach einem der vorhergehenden Ansprüche, **dadurch gekennzeichnet, daß** das in Strömungsrichtung vordere Ende des Rohres (7) mit einem Auffangbehälter verbunden ist.

7. Geber nach einem der vorhergehenden Ansprüche, **dadurch gekennzeichnet, daß** der Arbeitsstempel (1) den Vorratsbehälter (2) auf der in Richtung der Antriebskraft hinteren Seite verkürzt und die Flüssigkeit durch eine auf der in Richtung der Antriebskraft vorderen Seite angeordnete Auslaßöffnung (8) auspreßt.

8. Geber nach Anspruch 7, **dadurch gekennzeichnet, daß** der Vorratsbehälter (2) ein Balg ist, der an der in Richtung der Antriebskraft hinteren Seite durch die Bewegung des Arbeitsstempels (1) verkürzt wird.

9. Geber nach Anspruch 7, **dadurch gekennzeichnet, daß** der Vorratsbehälter (2) ein Zylinder und der Arbeitsstempel (1) ein damit zusammenarbeitender Kolben ist.

10. Geber nach einem der Ansprüche 7 bis 9, **gekennzeichnet durch** eine im wesentlichen koaxiale Anordnung von Vorratsbehälter (2), Kammer (5) und Kraftgeber (3), wobei die Antriebskraft im wesentlichen in axialer Richtung wirkt, sowie im in Richtung der Antriebskraft hinteren axialen Bereich die Kammer (5) radial innen und der Kraftgeber (3) radial außen sowie der Vorratsbehälter (2) in Entspannungsrichtung davor angeordnet ist.

11. Geber nach einem der Ansprüche 7 bis 9, **gekennzeichnet durch** eine im wesentliche koaxiale Anordnung von Vorratsbehälter (2), Kammer (5) und Kraftgeber (3), in der die Antriebskraft im wesentlichen in axialer Richtung wirkt, sowie im radial äußeren Bereich der Kraftgeber (3) in Richtung der Antriebskraft hinter der Kammer (5) angeordnet ist, wobei Kammer (5) und Kraftgeber (3) den Vorratsbehälter (2) umgeben.

12. Geber nach einem der vorhergehenden Ansprüche, **dadurch gekennzeichnet, daß** das Rohr (7) auf der in Richtung der Antriebskraft hinteren Seite der Kammer (5) angeordnet ist und der Bremsstempel (4) diese Seite in Richtung der Antriebskraft verschiebt.

13. Geber nach Anspruch 12, **dadurch gekennzeichnet, daß** die Kammer (5) als Balg gebildet ist, an dessen in Richtung der Antriebskraft hinterer Seite der Bremsstempel (4) anliegt.

14. Geber nach Anspruch 12, **dadurch gekennzeichnet, daß** die Kammer (5) aus Kolben und Zylinder gebildet ist, wobei der Kolben mit dem Bremsstempel (4) verbunden und der Zylinder fixiert oder der Kolben fixiert und der Zylinder mit dem Bremsstempel (4) verbunden ist.

15. Geber nach einem der vorhergehenden Ansprüche, **dadurch gekennzeichnet, daß** der Kraftgeber (3) eine Feder ist.

16. Geber nach einem der vorhergehenden Ansprüche, **dadurch gekennzeichnet, daß** die Antriebskraft über die gesamte Bewegung des Arbeitsstempels (1) annähernd konstant ist.

17. Geber nach einem der vorhergehenden Ansprüche, **dadurch gekennzeichnet, daß** das Rohr (7) lösbar an der Kammer (5) angebracht ist.

18. Verfahren zur Herstellung eines Gebers nach einem der vorhergehenden Ansprüche, **dadurch gekennzeichnet, daß** er zunächst mit maximaler Rohrlänge hergestellt und die Rohrlänge nachfolgend durch Abtrennung eines in Strömungsrichtung vorderen Stückes verkürzt wird.

19. Verfahren zur Verstellung des Entleerungszeitraumes eines Gebers nach Anspruch 17, **dadurch gekennzeichnet, daß** das Rohr (7) entfernt und durch ein anderes ersetzt wird.

## Claims

1. Dispenser for continuous discharge of a liquid, in particular a lubricant, over an adjustable period of time, the liquid being pushed out by means of a moving working plunger and a reservoir container and the movement of the working plunger taking place by means of a drive force, which is transmitted by a force transmitter, the force transmitter being in turn mechanically connected to a braking plunger, which counteracts the drive force with a braking force, in that it reduces the volume of a chamber filled with pasty liquid, and forces liquid out of said chamber, **characterised in that**
- the pasty liquid is forced through a tube (7),
- which can be split.

2. Dispenser according to claim 1, **characterised in that** the tube (7) is flexible.

3. Dispenser according to claim 1 or 2, **characterised in that** the tube (7) has a cross-section that is essentially constant along its length.

4. Dispenser according to one of the preceding claims, **characterised in that** the cross section of the tube (7) decreases in the flow direction of the pasty fluid.

5. Dispenser according to one of the preceding claims, **characterised in that** the pasty liquid is a silicone or silicone mixture.

6. Dispenser according to one of the preceding claims, **characterised in that** the, in the flow direction, front end of the tube (7) is connected to a collecting vessel.

7. Dispenser according to one of the preceding claims, **characterised in that** the working plunger (1) shortens the reservoir vessel (2) at the, in the direction of the drive force, rear side, and forces the liquid through an outlet opening (8) arranged at the, in the direction of the drive force, front side.

8. Dispenser according to claim 7, **characterised in that** the reservoir vessel (2) is a bellows, which is shortened at the, in the direction of the drive force, rear side by the movement of the working plunger (1).

9. Dispenser according to claim 7, **characterised in that** the reservoir vessel (2) is a cylinder and the working plunger (1) is a piston interacting with said reservoir vessel (2).

10. Dispenser according to one of claims 7 to 9, **characterised by** an essentially coaxial arrangement of reservoir vessel (2), chamber (5) and force transmitter (3), the drive force acting essentially in the axial direction, and, in the, in the direction of the drive force, rear axial region, the chamber (5) is arranged radially inward and the force transmitter (3) is arranged radially outward and the reservoir vessel (2) is arranged in front thereof in the relaxation direction.

11. Dispenser according to one of claims 7 to 9, **characterised by** an essentially coaxial arrangement of the reservoir vessel (2), chamber (5) and force transmitter (3), in which the drive force acts in the axial direction, and, in the radial outer region, the force transmitter (3) is arranged, in the direction of the drive force, behind the chamber (5), the chamber (5) and force transmitter (3) surrounding the reservoir vessel (2).

12. Dispenser according to one of the preceding claims, **characterised in that** the tube (7) is arranged on the, in the direction of the drive force, rear side of the chamber (5), and the braking plunger (4) displaces this side in the direction of the drive force.

13. Dispenser according to claim 12, **characterised in that** the chamber (5) is designed as a bellows, against the, in the direction of the drive force, rear side of which the braking plunger (4) lies.

14. Dispenser according to claim 12, **characterised in that** the chamber (5) is formed from a piston and cylinder, the piston being connected to the braking plunger (4) and fixing the cylinder or fixing the piston, and the cylinder being connected to the braking plunger (4).

15. Dispenser according to one of the preceding claims, **characterised in that** the force transmitter (3) is a spring.

16. Dispenser according to one of the preceding claims, **characterised in that** the drive force is approximately constant over the entire movement of the working plunger (1).

17. Dispenser according to one of the preceding claims, **characterised in that** the tube (7) is detachably mounted on the chamber (5).

18. Method for the production of a dispenser according to one of the preceding claims, **characterised in that** it is first produced with maximum tube length and the tube length is subsequently shortened by cutting off of an, in the flow direction, front piece.

19. Method for adjusting the discharge time of a transmitter according to claim 17, **characterised in that** the tube (7) is removed and replaced by a different one.

## Revendications

1. Capteur destiné à délivrer un fluide, notamment un lubrifiant, en continu sur une période réglable, le fluide étant chassé d'un réservoir au moyen d'un piston moteur dont le déplacement est commandé par une force motrice transmise par un capteur de force ; par ailleurs, le capteur de force est relié par voie mécanique à un piston ralentisseur dont la force de freinage agit à l'encontre de la force motrice dans la mesure où il réduit le volume d'une chambre remplie d'un fluide pâteux qu'il en expulse,
**caractérisé en ce que**
- le fluide pâteux est expulsé par un tube (7)
- que l'on peut couper.

2. Capteur selon la revendication 1, **caractérisé en ce que** le tube (7) est flexible.

3. Capteur selon la revendication 1 ou 2, **caractérisé en ce que** le tube (7) a une section essentiellement constante sur toute sa longueur.

4. Capteur selon l'une des revendications précédentes, **caractérisé en ce que** la section du tube (7) diminue dans le sens de l'écoulement du fluide pâteux.

5. Capteur selon l'une des revendications précédentes, **caractérisé en ce que** le fluide pâteux est un silicone ou un mélange de silicone.

6. Capteur selon l'une des revendications précédentes, **caractérisé en ce que** l'extrémité antérieure du tube (7), dans le sens de l'écoulement, est reliée à un récipient pour récupérer le fluide pâteux.

7. Capteur selon l'une des revendications précédentes, **caractérisé en ce que** le piston moteur (1) raccourcit le réservoir (2) du côté de la face arrière, dans le sens de la force motrice, et chasse le fluide par un orifice de sortie (8) située sur la face avant, dans le sens de la force motrice.

8. Capteur selon la revendication 7, **caractérisé en ce que** le réservoir (7) est un soufflet raccourci par le déplacement du piston moteur (1) du côté de sa face arrière, dans le sens de la force motrice.

9. Capteur selon la revendication 7, **caractérisé en ce que** le réservoir (2) est un cylindre fonctionnant avec le piston moteur (1).

10. Capteur selon l'une des revendications 7 à 9, **caractérisé en ce que** le réservoir (2), la chambre (5) et le capteur de force (3) sont essentiellement coaxiaux, la force motrice agissant principalement dans le sens axial ; la chambre (5) est disposée dans le sens radial à l'intérieur et le capteur de force (3) à l'extérieur, dans la zone axiale arrière, dans le sens de la force motrice, le réservoir (2) étant placé avant dans le sens de la détente.

11. Capteur selon l'une des revendications 7 à 9, **caractérisé en ce que** le réservoir (2), la chambre (5) et le capteur de force (3) sont essentiellement coaxiaux, la force motrice agissant principalement dans le sens axial ; le capteur de force (3) se trouve derrière la chambre (5), dans le sens de la force motrice, la chambre (5) et le capteur de force (3) entourant le réservoir (5).

12. Capteur selon l'une des revendications précédentes, **caractérisé en ce que** le tube (7) est placé sur la face arrière de la chambre (5), dans le sens de la force motrice, et le piston ralentisseur (4) pousse cette face, dans le sens de la force motrice.

13. Capteur selon la revendication 12, **caractérisé en ce que** la chambre (5) a la forme d'un soufflet, le piston ralentisseur (4) touchant la face arrière du soufflet, dans le sens de la force motrice.

14. Capteur selon la revendication 12, **caractérisé en ce que** la chambre (5) est formée par un piston et un cylindre, le piston étant relié au piston ralentisseur (4) et le cylindre étant fixé, ou le piston étant fixé et le cylindre étant relié au piston ralentisseur (4).

15. Capteur selon l'une des revendications précédentes, **caractérisé en ce que** le capteur de force (3) est un ressort.

16. Capteur selon l'une des revendications précédentes, **caractérisé en ce que** la force motrice est approximativement constante sur la totalité du déplacement du piston moteur (1).

17. Capteur selon l'une des revendications précédentes, **caractérisé en ce que** le tube (7) raccordé à la chambre (5) est amovible.

18. Procédé de fabrication d'un capteur selon l'une des revendications précédentes, **caractérisé par le fait que** l'on dote tout d'abord le capteur d'un tube de longueur maximale que l'on raccourcit ultérieurement en en coupant un morceau à l'extrémité avant, dans le sens de l'écoulement.

19. Procédé d'ajustage de la durée de vidange d'un capteur selon la revendication 17, **caractérisé par le fait que** l'on démonte le tube (7) et qu'on le remplace par un autre.
